(19) Europäisches Patentamt
European Patent Office
Office européen des brevets

(11) Veröffentlichungsnummer: **0 482 328 B1**

(12) **EUROPÄISCHE PATENTSCHRIFT**

(45) Veröffentlichungstag der Patentschrift: **20.12.95**

(51) Int. Cl.[6]: **A01N 43/80**, //(A01N43/80, 33:04,25:02)

(21) Anmeldenummer: **91115050.6**

(22) Anmeldetag: **06.09.91**

# (54) Flüssige 1,2-Benzisothiazolin-3-on-Zubereitung

(30) Priorität: **19.10.90 DE 4033272**

(43) Veröffentlichungstag der Anmeldung:
**29.04.92 Patentblatt 92/18**

(45) Bekanntmachung des Hinweises auf die Patenterteilung:
**20.12.95 Patentblatt 95/51**

(84) Benannte Vertragsstaaten:
**BE DK ES FR GB IT NL SE**

(56) Entgegenhaltungen:

| | |
|---|---|
| **EP-A- 0 038 416** | **EP-A- 0 243 616** |
| **EP-A- 0 385 369** | **EP-A- 0 392 250** |
| **DE-A- 1 492 383** | **FR-A- 2 087 938** |

(73) Patentinhaber: **SCHÜLKE & MAYR GMBH**

**D-22840 Norderstedt (DE)**

(72) Erfinder: **Eggensperger, Heinz, Dr.**
**Alsterallee 13**
**W-2000 Hamburg 65 (DE)**
Erfinder: **Oltmanns, Peter, Dr.**
**Lutterothstrasse 85**
**W-2000 Hamburg 20 (DE)**
Erfinder: **Scheler, Karl-Heinz**
**Schwalbenplatz 15**
**W-2000 Hamburg 60 (DE)**
Erfinder: **Diehl, Karl-Heinz**
**Buschberger Weg 47**
**W-2000 Norderstedt (DE)**

(74) Vertreter: **UEXKÜLL & STOLBERG**
**Patentanwälte**
**Beselerstrasse 4**
**D-22607 Hamburg (DE)**

**EP 0 482 328 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft flüssige Zubereitungen von 1,2-Benzisothiazolin-3-on (BIT) mit Aminen und gegebenenfalls einem Gehalt an weiteren Lösungsmitteln und üblichen Zusätzen.

Das 1,2-Benzisothiazolin-3-on (BIT) ist als antimikrobieller Wirkstoff bekannt und wird als technisches Konservierungsmittel oder allgemein als ein gegen mikrobiell bedingte Materialzerstörung ("Mikromatz") geeigneter Zusatz verwendet. Um diese Verbindung in leicht handhabbarer und gut dosierbarer Zubereitung zur Verfügung zu stellen, kann man aus dem bei der Synthese anfallenden rohen BIT eine wäßrige Dispersion herstellen; derartige Dispersionen sind jedoch nicht lagerstabil und setzen sich mit der Zeit ab. Zur Herstellung wäßriger stabiler BIT-Lösungen hat man gemäß DE-OS 28 40 273 BIT in Form seines Alkalisalzes in Hydroxylgruppen enthaltenen organischen Lösungsmitteln wie Propylenglykol oder in Mischungen dieser mit Wasser eingesetzt oder nach US-PS 4 871 754 wäßrige Lösungen des BIT-Lithiumsalzes hergestellt. Diese Zubereitungen sind bei höheren BIT-Konzentrationen jedoch nicht hinreichend kältestabil und erfordern den Zusatz eines Lösungsmittels wie 1,2 Propylenglykol. Weiterhin sind gemäß GB-PS 11 91 253 wäßrige Lösungen von rohem BIT mit zwei oder mehreren Aminverbindungen aus der Reihe des Diethanolamins, Triethanolamins, Diisopropanolamins, Triisopropanolamins oder Morpholins bekannt; in diesen wäßrigen Lösungen liegt das BIT als Gemisch der Aminsalze vor. Ferner ist es gemäß GB-PS 13 30 531 bekannt, BIT-Aminsalze mit einer verbesserten Kältestabilität in Form von Lösungen in aliphatischen, cycloaliphatischen oder heterocyclischen Aminen mit 2 bis 6 C-Atomen vorzusehen, die von Hydroxyl- und Ethergruppen frei sind. Die Wirkung dieser Zubereitungen gegen "Mikromatz" ist jedoch vielfach nicht ausreichend. Letztlich sind gemäß DE-OS 36 09 939 synergistisch wirksame flüssige Zubereitungen aus BIT und Aminoxethylaten bekannt, die noch Wasser, mit Wasser mischbare Lösungsmittel wie Polyglykole sowie weitere Hilfsstoffe wie Komplexbildner und/oder Wasserenthärtungsmittel enthalten.

Die Erfindung hat sich die Aufgabe gestellt, eine neue flüssige Zubereitung auf Basis von BIT und Aminen vorzuschlagen, die bei einer möglichst hohen Wirkstoffkonzentration einmal eine gute Lagerstabilität aufweisen und zum anderen gegen "Mikromatz" im technischen Bereich eine überraschende synergistische Wirkung zeigen und ferner mit einem Mindestgehalt an organischen Lösungsmitteln und vorzugsweise nur mit Wasser als Lösungsmittel zu stabilen Produkten verarbeitet werden können und somit ökologisch und auch aus humantoxischer Sicht besser geeignet sind.

Zur Lösung dieser Aufgabe wird eine flüssige Zubereitung gemäß Hauptanspruch vorgeschlagen, wobei besonders bevorzugte Ausführungsformen in den Unteransprüchen ausgeführt sind; ferner wird die Verwendung dieser Zusammensetzungen gegen "Mikromatz" im technischen Bereich insbesondere in wasserhaltigen bzw. wasserverdünnbaren technischen Produkten vorgeschlagen.

Die erfindungsgemäßen Zubereitungen können einmal nur aus BIT und ein oder mehreren Aminen gemäß Formel I bestehen und keine weiteren Lösungsmittel enthalten. In diesem Fall ist aus Gründen der Lagerstabilität und wegen der besseren Handhabbarkeit der Gehalt an BIT auf maximal 10 Gew.-% beschränkt.

Zum anderen können Zubereitungen mit einer höheren BIT-Konzentration und den Aminen gemäß Formel I vorgesehen werden, wenn noch ein oder mehrere Lösungsmittel vorgesehen sind.

Als Lösungsmittel kommen hier außer Wasser noch mit Wasser mischbare Lösungsmittel in Betracht wie niedere ein-, zwei- und dreiwertige Alkohole, Glykole, Di- und Polyglykole, Ether von Glykolen, Di- und Polyglykole wie z.B. Ethanol, Isopropanol, Propandiol-1,2, Propandiol-1,3, Glycerin, Butantriol-1,2,3, Butantriol-1,2,4, Ethylenglykol, Diethylenglykol, Triethylenglykol, Polyethylenglykol, Dipropylenglykol, Ethylenglykolmonomethylether, Ethylenglykolmonoethylether, Ethylenglykolmonopropylether, Ethylenglykolmonobutylether, Diethylenglykolmonomethylether, Diethylglykolmonoethylether, Diethylenglykolmonopropylether, Diethylenglykolmonobutylether, Diethylenglykoldimethylether und Diethylenglykoldiethylether, wobei die Verwendung von Dipropylenglykol und Butyldiglykol bevorzugt wird.

Bei flüssigen Zubereitungen, die BIT und organische Amine gemäß Formel I und gegebenenfalls noch andere Lösungsmittel enthalten, soll das Molverhältnis von BIT zu den Aminen höchstens 3:1 betragen. Bei diesem Konzentrationsverhältnis wird das gesamte BIT in sein Aminsalz überführt. Für ein Amin gemäß Formel I mit R = Lauryl und m + n = 3 bedeutet dieses ein Verhältnis von 10 Gewichtsteilen BIT zu 6,6 Gewichtsteilen Amin. Dieses Gewichtsverhältnis wird in den erfindungsgemäßen Beispielen 1 bis 5 und 9 erreicht.

Die organischen Amine gemäß Formel I sind $C_6$- bis $C_{22}$ und vorzugsweise $C_{10}$- bis $C_{14}$ geradkettige oder verzweigtkettige Alkyl- oder Alkenylamine, wie beispielsweise Derivate von Fettaminen $R-NH_2$, in denen R ein Kokosfettalkyl-($C_8$- bis $_c18$), vorwiegend $C_{12}$ bis $C_{14}$-Alkyl-), ein Oleyl (überwiegend $C_{18}$-Alkenyl-), ein Stearyl-($C_{16}$- bis $C_{18}$-Alkyl-) oder ein Talgfettalkyl-Rest ($C_{16}$- bis $C_{18}$-Alkyl- bzw. Alkenyl-)

bedeutet. Diese Amine sind als Handelsprodukte auf dem Markt und lassen sich, was die Kettenlänge betrifft, entweder mit einer breiten oder einer engeren C-Atomverteilung einsetzen.

Besonders bevorzugt sind Zubereitungen, bei denen die Aminverbindungen gemäß Formel I als Substituent R einen Laurylrest aufweist und n + m einen Wert von 3 bedeuten. Derartige Amine werden vorzugsweise in einer Menge von 3 bis 60% zusammen mit etwa 5 bis 35 Gew.-% BIT nebst restlichem Lösungsmittel eingesetzt, wobei das Lösungsmittel im wesentlichen aus Glykolen und vorteilhafterweise auch aus Wasser besteht. Beispielsweise kann eine derartige Zusammensetzung aus 5 bis 30 Gew.-% BIT, 3 bis 20 Gew.-% eines Amins gemäß Formel I, 25 bis 40 Gew.-% eines glykolartigen Lösungsmittels und 67 bis 10 Gew.-% Wasser bestehen.

Bei einer anderen bevorzugten Ausführungsform kann die Zubereitung, insbesondere bei der Herstellung von emissionsarmen Zubereitungen mehr oder weniger ohne organische Lösungsmittel hergestellt werden, wobei dann zur Erzielung kältestabiler und lagerstabiler Zubereitungen die Aminverbindung mindestens in der doppelten zur BIT-Salzbildung benötigten Menge enthalten sein sollte. Beispielsweise enthält eine derartige Zusammensetzung dann 5 bis 20 Gew.-% BIT und 6,5 bis 26 Gew.-% der organischen Aminverbindungen gemäß Formel I und 88,5 bis 54 Gew.-% Wasser.

Als weitere übliche Zusatzstoffe können nichtionische, kationische und/oder anionische Tenside als Emulgier- oder Dispergiermittel oder als Lösungsvermittler eingesetzt werden, wobei die Menge dieser Zusätze bis zu 25% und vorzugsweise 5 bis 25% und insbesondere 10 bis 20% ausmacht.

Ferner können als weitere Zusätze an sich bekannte Komplexbildner und/oder Wasserenthärtungsmittel zugesetzt werden, die zur Komplexierung von Calcium-, Magnesium- oder Eisenionen geeignet sind. Derartige Zusätze liegen normalerweise unter etwa 15 Gew.-% und vorzugsweise nicht über 10 Gew.-%, bezogen auf die Zubereitung. Ferner können noch als übliche Zusatzstoffe färbende Zusätze, Aromastoffe, Trübungsmittel und natürlich auch weitere desinfizierende Komponenten zugesetzt werden.

Die erfindungsgemäße flüssige Zusammensetzung ist zum Einsatz bei wasserhaltigen bzw. wasserverdünnbaren technischen Produkten gegen "Mikromatz", insbesondere in flüssigen Systemen wie beispielsweise bei Kunststoff-Dispersionen auf Basis von Polystyrol, Polyacrylat oder Polyvinylacetat und ferner bei Farben, Klebstoffen, Papierbeschichtungsmassen, Textilweichmachungs- und Schlichtungsmitteln, bei Waschrohstoffen, Reinigungs- und Poliermitteln, Spinnbädern, Kühlschmierstoffen, Lederbehandlungsmitteln und bei Silikon- und Bitumenemulsionen geeignet.

Die Verwendung der erfindungsgemäßen Zubereitungen erfolgt vorzugsweise mit einer Einsatzkonzentration von 0,05 bis 0,3 Gew.-% bezogen auf das zu konservierende Substrat.

Abgesehen von der erfindungsgemäßen prinzipiellen flüssigen Zubereitung, die im einfachsten Falle aus 10 Gew.-% BIT und 90 Gew.-% der Aminverbindung besteht und eine hoch-viskose klare Lösung darstellt, die noch mit weiteren Zusatzstoffen versetzt werden kann, dienen die folgenden Beispiele zur weiteren Erläuterung, wobei sich die Konzentrationsangaben auf den Gehalt an Aktivstoff beziehen. Zur Herstellung der flüssigen Zubereitungen gemäß den folgenden Beispielen wird zweckmäßig die Aminverbindung mit den Lösungsmitteln und den gegebenenfalls erforderlichen Hilfsstoffen vorgelegt und nach Zugabe von BIT bei Temperaturen von 40 bis 50 °C bis zur klaren Löslichkeit gerührt.

| **Beispiel 1** | **Gew.-%** |
|---|---|
| 1,2-Benzisothiazolin-3-on<br>Lauryldipropylentriamin<br>Dipropylenglykol<br>Butyldiglykol | 35<br>23<br>22<br>20 |
| **Beispiel 2** | |
| 1,2-Benzisothiazolin-3-on<br>Lauryldipropylentriamin<br>Dipropylenglykol | 10<br>6,6<br>83,4 |
| **Beispiel 3** | |
| 1,2-Benzisothiazolin-3-on<br>Lauryldipropylentriamin<br>Dipropylenglykol<br>Wasser | 30<br>20<br>38<br>12 |
| **Beispiel 4** | |
| 1,2-Benzisothiazolin-3-on<br>Lauryldipropylentriamin<br>Butyldiglykol<br>1,2-Propylenglykol<br>Wasser | 5<br>3,3<br>50<br>25<br>16,7 |
| **Beispiel 5** | |
| 1,2-Benzisothiazolin-3-on<br>Lauryldipropylentriamin<br>Dipropylenglykol<br>Wasser | 10<br>6,6<br>50<br>33,4 |

| **Beispiel 6** | **Gew.-%** |
|---|---|
| 1,2-Benzisothiazolin-3-on<br>Lauryldipropylentriamin<br>Wasser | 10<br>13,2<br>76,8 |
| **Beispiel 7** | |
| 1,2-Benzisothiazolin-3-on<br>Lauryldipropylentriamin<br>Wasser | 18<br>35<br>47 |
| **Beispiel 8** | |
| 1,2-Benzisothiazolin-3-on<br>Lauryldipropylentriamin<br>Wasser | 20<br>26<br>54 |
| **Beispiel 9** | |
| 1,2-Benzisothiazolin-3-on<br>Lauryldipropylentriamin<br>Wasser<br>ethoxylierter Fettalkohol mit 11 EO | 10<br>6,6<br>63,4<br>20 |

Die in den erfindungsgemäßen Zubereitungen vorliegende synergistische Wirkungssteigerung wird aus den Ergebnissen eines Reihenverdünnungstestes ersichtlich, der beispielhaft mit einer erfindungsgemäßen Kombination im Vergleich zu den Einzelsubstanzen durchgeführt wurde.

Der Test wurde nach den Richtlinien der Deutschen Gesellschaft für Hygiene und Mikrobiologie durchgeführt. Die Verdünnungsstufen reichten von 5000, 2500, 1250 µg/ml bis 9,8 µg/ml. Als Testkeime wurden verwendet:

Staphylococcus aureus
Pseudomonas aeruginosa
Candida albicans
Penicillium funiculosum
Aspergillus niger

Es wurden die minimalen Hemmkonzentrationen (MHK-Werte) des Beispiels A, welches eine erfindungsgemäße Zubereitung repräsentiert, die der Beispiele B und C, welche die Einzelkomponente Benzisothiazolin-3-on enthalten, sowie die des Beispiels C, welches die Einzelkomponente Lauryldipropylentriamin enthält, bestimmt.

Erfindungsgemäßes Beispiel A wurde hergestellt aus 10 % Benzisothiazolin-3-on, 10 % Lauryldipropylentriamin, 30 % Dipropylenglykol und 50 % Wasser.

Vergleichsbeispiel B gemäß Patent DE 28 40 273 wurde hergestellt aus 10 % Benzisothiazolin-3-on, 5,9 % Natronlauge (45 %ig), 30 % Dipropylenglykol und 54,1 % Wasser.

Vergleichsbeispiel C gemäß Patent GB 1 330 531 wurde hergestellt aus 10 % Benzisothiazolin-3-on, 6,7 % Ethylendiamin, 30 % Dipropylenglykol und 53,3 % Wasser.

Vergleichsbeispiel D wurde hergestellt aus 10 % Lauryldipropylentriamin, 30 % Dipropylenglykol und 60 % Wasser.

Zur Demonstration des Synergismus kann die Kalkulationsmethode nach F. C. Kull, P. C. Eisman, H. D. Sylvestrowicz und R. L. Mayer, Applied Microbiology 9 (1961) 538 angewandt werden.

Bei dieser Methode wird ein "synergism index" SI berechnet nach

$$\frac{Q_A}{Q_a} + \frac{Q_B}{Q_b} = SI$$

worin $Q_a$ bzw. $Q_b$ die Menge der Komponente A bzw. B alleine und $Q_A$ bzw. $Q_B$ die Menge der jeweiligen Komponente in einem Gemisch aus A und B bedeuten, die benötigt wird, einen definierten Endpunkt zu erreichen.

Ist SI < 1, liegt ein Synergismus, bei SI = 1 lediglich eine additive Wirksamkeit vor, während SI > 1 einen Antagonismus bedeutet.

Als Endpunkt ist in diesem Reihenverdünnungstest die Konzentration anzusetzen, bei der das Wachstum der Mikroorganismen gerade noch unterdrückt wird, d.h. die minimale Hemmkonzentration.

Zur Berechnung der SI-Werte lassen sich demnach die MHK-Werte der getesteten Beispiele wie folgt in Beziehung setzen:

$$SI = \frac{MHK_{\text{Beisp. A}}}{MHK_{\text{Beisp. B oder C}}} \div \frac{MHK_{\text{Beisp. A}}}{MHK_{\text{Beisp. D}}}$$

Die aus nachfolgender Tabelle zu entnehmenden SI-Werte verdeutlichen das Vorliegen eines Synergismus. Dieser ist bei den besonders praxisrelevanten Keimen Ps. aeruginosa und A. niger besonders ausgeprägt. Die Folge ist ein gegenüber den bekannten BIT-Formulierungen ausgeglicheneres Wirkungsspektrum bei niedrigeren Einsatzkonzentrationen.

| Keim | MHK-Werte [µg/ml] | | | | SI |
|---|---|---|---|---|---|
| | Beispiel A | B | C | D | |
| Staph. aureus | 78 | 312 | 312 | 625 | 0,38 |
| Ps. aeruginosa | 312 | 2500 | 2500 | 2500 | 0,25 |
| C. albicans | 156 | 312 | 312 | 5000 | 0,53 |
| P. funiculosum | 78 | 156 | 156 | 5000 | 0,52 |
| A. niger | 312 | 1250 | 1250 | 5000 | 0,31 |

## Patentansprüche

1. Flüssige Zubereitung aus 1,2-Benzisothiazolin-3-on (BIT) und Aminen und gegebenenfalls mit einem Gehalt an weiteren Lösungsmitteln und üblichen Zusätzen, **dadurch gekennzeichnet**, daß sie als Amin ein oder mehrere Amine der allgemeinen Formel

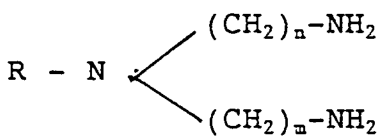

(I)

enthält, in der R einen geradkettigen oder verzweigtkettigen Alkyl- oder Alkylenrest mit 6 bis 22 C-Atomen bedeutet und n + m einen Wert von 4 bis 12 hat, wobei sie BIT und Amine gemäß Formel I in einem Molverhältnis von maximal 3:1 enthält.

2. Flüssige Zusammensetzung nach Anspruch 1, **dadurch gekennzeichnet**, daß sie ein Amin der allgemeinen Formel I enthält, in der der Rest R 10 bis 14 C-Atome enthält.

3. Flüssige Zusammensetzung nach Anspruch 1 bis 2, **dadurch gekennzeichnet**, daß sie ein bin der allgemeinen Formel I enthält, in der n + m einen Wert von 6 hat.

4. Flüssige Zusammensetzung nach Anspruch 1, **dadurch gekennzeichnet**, daß sie aus bis zu 10 Gew.-% BIT und mindestens 90 Gew.-% Aminen gemäß Formel I besteht.

5. Flüssige Zusammensetzung nach Anspruch 1 bis 4, **dadurch gekennzeichnet**, daß sie 5 bis 35 Gew.-% BIT, bis zu 95 Gew.-% der Amine gemäß Formel I und ein Verdünnungsmittel aus der Gruppe der Glykolether, Glykole und Wasser enthält.

6. Flüssige Zusammensetzung nach Anspruch 1 bis 5, **dadurch gekennzeichnet**, daß sie bis 20 Gew.-% eines Komplexierungsmittels enthält.

7. Verwendung einer flüssigen Zusammensetzung gemäß einem der Ansprüche 1 bis 6 in einer Menge von mindestens 0,05 bis 0,3 Gew.-% als Mittel gegen mikrobiell bedingte Materialzerstörung bei wasserhaltigen bzw. wasserverdünnbaren Produkten wie Kunststoffdispersionen, Farben, Klebstoffen, Papierbeschichtungsmassen, Textilweichmachern, Schlichtungsmitteln, Waschrohstoffen, Reinigungs- und Poliermitteln, Spinnbädern, Kühlschmierstoffen, Lederbehandlungsmitteln, Silikon- und Bitumenemulsionen.

## Claims

1. Liquid preparation of 1,2-benzisothiazolin-3-one (BIT) and amines and optionally a content of other solvents and usual additives, **characterized in that** it contains as amine one or more amines of the general formula

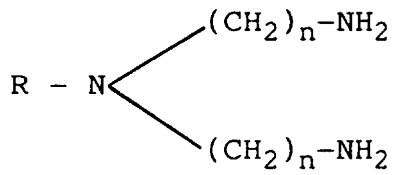

(I)

in which R is a straight-chained or branched-chained alkyl or alkylene group having 6 to 22 C atoms and n + m has a value of 4 to 12, whereby it contains BIT and amines according to formula I in a maximum molar ratio of 3:1.

**2.** Liquid composition according to claim 1, **characterized in that** it contains an amine of the general formula I in which the R group contains 10 to 14 C atoms.

**3.** Liquid composition according to claim 1 or 2, **characterized in that** it contains an amine of the general formula I in which n + m has a value of 6.

**4.** Liquid composition according to claim, **characterized in that** it consists of up to 10 % by wt. BIT and at least 90 % by wt. amines according to Formula I.

**5.** Liquid composition according to claim 1 to 4, **characterized in that** it contains 5 to 35 % by wt. BIT, up to 95 % by wt. of the amines according to formula I and a dilution agent from the group of glycol ethers, glycols and water.

**6.** Liquid composition according to claim 1 to 5, **characterized in that** it contains up to 20 % by wt. of a complexing agent.

**7.** Use of a liquid composition according to one of claims 1 to 6 in a quantity of at least 0.05 to 0.3 % by wt. as agent against microbially caused material destruction in water-containing or water-dilutable products such as plastics dispersions, paints, adhesives, paper-coating compositions, textile plasticizers, sizing agents, detergent raw materials, cleaning and polishing agents, spinning baths, cooling lubricants, leather-treatment agents, silicon and bitumen emulsions.

## Revendications

**1.** Composition liquide de 1,2-benzisothiazolin-3-one (BIT) et d'amine et, le cas échéant, comportant d'autres solvants et additifs classiques, caractérisée en ce que, en tant qu'amine, elle comprend une ou plusieurs amines répondant à la formule générale:

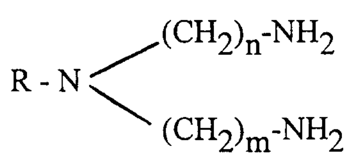

(I)

dans laquelle:

R représente un résidu alkyle ou alkylène, linéaire ou ramifié, comportant 6 à 22 atomes de carbone, et

n + m est compris entre 4 et 12,

et en ce qu'elle renferme la BIT et l'amine de formule I dans un rapport molaire maximum de 3/1.

**2.** Composition liquide selon la revendication 1, caractérisée en ce qu'elle comprend une amine de formule générale I, dans laquelle le résidu R comporte 10 à 14 atomes de carbone.

**3.** Composition liquide selon les revendications 1 et 2, caractérisée en ce qu'elle comprend une amine de formule générale I dans laquelle la somme de n + m a une valeur de 6.

**4.** Composition liquide selon la revendication 1, caractérisée en ce qu'elle comprend jusqu'à 10% en poids de BIT et au moins 90% en poids d'amine de formule générale I.

**5.** Composition liquide selon les revendications 1 à 4, caractérisée en ce qu'elle comprend 5 à 35% en poids de BIT, jusqu'à 95% en poids d'amine de formule générale I et un diluant du groupe des glycoléthers, glycols et eau.

**6.** Composition liquide selon les revendications 1 à 5, caractérisée en ce qu'elle comprend jusqu'à 20% en poids d'agent complexant.

**7.** Utilisation d'une composition liquide selon l'une quelconque des revendications 1 à 6, en tant qu'agent contre la dégradation d'origine microbienne des matières, à raison de 0,05 à 0,3% en poids, dans des produits aqueux, ou bien pouvant être diluée dans l'eau, comme les dispersions de matières plastiques, colorants, colles, masses de couchage de papier, adoucisseur textile, agents d'encollage, matières premières pour détergents, agents de nettoyage et de polissage, réfrigérant, lubrifiant, produits de traitement des peaux, émulsions siliconées ou bitumineuses.